(19) Europäisches Patentamt / European Patent Office / Office européen des brevets

(11) **EP 3 275 960 B1**

(12) **EUROPEAN PATENT SPECIFICATION**

(45) Date of publication and mention
of the grant of the patent:
**23.01.2019 Bulletin 2019/04**

(51) Int Cl.:
*C09J 103/06* (2006.01)   *C09J 103/14* (2006.01)

(21) Application number: **16305966.0**

(22) Date of filing: **26.07.2016**

(54) **STARCH BASED ADHESIVE COMPOSITION FOR BONDING PLIES OF MULTI-PLY SHEETS OF TISSUE PAPER**

AUF STÄRKE BASIERENDE KLEBSTOFFZUSAMMENSETZUNG ZUM BINDEN VON MEHREREN MEHRLAGIGEN BÖGEN VON GEWEBEPAPIER

COMPOSITION ADHÉSIVE À BASE D'AMIDON POUR LE COLLAGE DE PLIS DE FEUILLES DE PAPIER DE SOIE MULTICOUCHE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.01.2018 Bulletin 2018/05**

(73) Proprietor: **BOSTIK SA
93210 La Plaine Saint Denis (FR)**

(72) Inventors:
• **MULLER-SELLAK, Saida
60200 Compiegne (FR)**

• **BÜTEROWE, Frank
33818 Leopoldshöhe
de (DE)**

(74) Representative: **Santarelli
49, avenue des Champs-Elysées
75008 Paris (FR)**

(56) References cited:
**US-A- 5 858 554     US-A1- 2013 052 379
US-B1- 6 379 447**

**Description**

The present invention relates to an adhesive composition for bonding plies of multi-ply sheets of tissue paper, comprising at least one acetylated starch, at least one cellulose-based thickener and urea, as well as its use for the bonding of plies, in view of the manufacture of multi-ply sheets of tissue paper.

The multi-ply sheets (or multiple-ply sheets), typically sold in roll form such that hygiene paper rolls are sheets of tissue paper comprising at least two plies, that is to say at least two units (or folds or plies) of tissue paper. The term *"hygiene paper"* encompasses paper towels, toilet paper, household towels, hand wipes, handkerchiefs and napkins.

These multi-ply sheets are generally manufactured according to methods such as embossing production processes implemented in industrial plants operating continuously at high speed (typically at a speed of 600 meters per minute). These methods include bonding at least two plies, usually three or four plies, by a suitable adhesive, prior to shaping, for example in roll form by winding around a rigid cardboard sleeve.

The adhesive composition must have a high velocity grip, so as to ensure the productivity of the industrial plant.

Even though other compositions were envisaged in the literature, the aqueous adhesive compositions comprising polyvinyl alcohol (PVOH) are widely used for bonding substrates made of paper, cardboard or wood, in particular multi-ply sheets of paper tissue.

The synthetic PVOH-based adhesive composition is a standard widely used adhesive for bonding two to five plies. This adhesive composition is generally in liquid concentrate for dilution on the spot, depending on the industrial facility needs. The mixing for this dilution is advantageously carried out within a relatively short period of time. However, this adhesive composition has the drawback of often fouling or clogging the metallic cylinders or other machine elements used for the manufacture of multi-ply sheets. This fouling is harmful because it causes the stop of the line, and it is particularly difficult to remove.

Some starch based adhesive compositions have been tests. However they must be cooked before use, and there appears a resulting bond strength issue or stability issue over time. For example, US Patent 6,379,447 provides an adhesive composition for thin paper, comprising a continuous phase of 15 to 50% by weight of at least one polysaccharide dispersed in water, the continuous phase of polysaccharide being prepared by cooking (temperature 70°C - 200°C) and dispersion. A comparative example IX, presented in Table 2, columns 11 and 12, describes an adhesive composition having 12% solids (comprised of two parts of propylated enzyme degraded waxy starch and 1 part crosslinked waxy starch). This adhesive composition does not present any resulting bond strength.

Therefore, there remains the need for an adhesive composition for bonding plies of multi-ply sheets of tissue paper, easy to use in existing industrial plants, and having bonding results at least of the same value as those of the commercial PVOH-based adhesive compositions.

The present invention is to provide a new adhesive composition meeting these criteria.

One of the objects of the invention is an adhesive composition in dry form, for bonding plies of multi-ply sheets of tissue paper, said composition comprising:

- At least one acetylated starch, the acetylated starch having a percentage of acetylation within a range of 0.1 to 8% by weight with respect to the total weight of the acetylated starch; in an amount within a range of 70 to 80% by weight with respect to the total weight of the composition;
- At least one cellulose-based thickener in an amount within a range of 2 to 5 % by weight, with respect to the total weight of the composition; and
- Urea in an amount within a range of 15 to 25% by weight with respect to the total weight of the composition.

The percentage of acetylation of the acetylated starch is usually provided by the manufacturer of the acetylated starch. This acetylation percentage is generally measured by a chemical method such as the ISI (International Starch Institute) standard ISI-14e (1999) *"determination of acetyl content"* (using a mixture of reagents among which sodium hydroxide, hydrochloric acid and phenolphtalein in ethanol) or, alternatively, by the ISO (International Standard Organization) enzymatic method ISO 11213 (1995) *"Determination of Acetyl content - enzymatic method"* (using hydrochloric acid ant coenzyme A (CoA)) for acetyl contents up to 2%.

As it is known to the skilled person, the acetylated starch is also a depolymerized starch, since the acetylation reaction which occurs usually makes also the polymer chains shorter. Actually, partial depolymerisation should occur simultaneously with acetylation. Thus, acetylated starches are also called acetylated depolymerised starches.

The acetylation of starch is carried out by the means of acetic anhydride (or acetic acid) according to conditions well known to the skilled person, as it is described for example in patent document US 2,362,282 to which it is referred here.

According to the invention, the acetylated starch has percentage of acetylation (% acetyl) within a range of 0.1 to 8%, more preferably within a range of 0.5 to 4% by weight with respect to the total weight of the acetylated starch. This corresponds to a degree of substitution (DS) of around 0.01 to 0.33%, the DS being defined by:

$$DS = \frac{162 \times (\% \, acetyl)}{4,300 - (42 \times \% \, acetyl)}$$

Advantageously, the acetylated starch according to the invention is generally soluble in cold water (i.e. presents a substantially homogeneous solution without lumps, once dissolved in water at a temperature of about 20°C). This is linked to the fact since it has an acetyl value of 0.1-8% by weight. This cold solubility of the acetylated starch represents one of the advantages of the adhesive compositions according to the invention.

The determination of the cold-water solubility of acetylated starch was carried out by specific procedure following the method of EASTMAN and MOORE (1984) described for example in US 4,465,702. Indeed a starch sample is mixed with distilled water at 23°C in a blender jar, the mixture is centrifuged, an aliquot of the supernatant liquid is evaporated and the residues are weighted. The water cold solubility is the maximum percentage by weight of the starch which can be mixed in the solution without lumps, that is to say that the starch rapidly swells and disperses into water to form a smooth viscous paste.

Acetylated starches according to the invention display from 20 to 40% of cold-water solubility. Most preferred are those exhibiting a cold-water solubility of about 30%.

Preferably, the acetylated starch is present in an amount within a range of 75 to 78% by weight with respect to the total weight of the composition.

Preferably, the cellulose-based thickener is present in an amount within a range of 2 to 3% by weight with respect to the total weight of the composition.

Preferably, urea is present in an amount of 18 to 22% by weight with respect to the total weight of the composition.

According to the invention, the *"cellulose-based thickener"* is a thickener comprising a major part of cellulose or cellulose derivative or their salts. As examples of cellulose derivatives which may be employed according to the invention, mention may be made cellulose ethers such as of hydroxyalkyl ethers of cellulose soluble in water, e.g. hydroxyethylcellulose, hydroxypropylcellulose and hydroxybutylcellulose, such as are obtainable by the action of alkylene oxide or alkylene chlorohydrin on alkali cellulose. Further, cellulose derivatives may be employed, such as those obtainable by etherification of cellulose with glycine alcohol and other compounds containing an alkylene oxide radical, or with glycerine chlorohydrin and other compounds yielding cellulose ethers in which an ether radical contains more than one hydroxyl group. Examples of other cellulose derivatives which can be employed according to the invention are carboxyalkyl ethers of cellulose, e.g. carboxy-methyl cellulose.

A preferred cellulose-based thickener is sodium carboxymethyl cellulose (Na-CMC), such as the commercial product Akucell® AF 2985 from Akzo Nobel (CAS number 9004-32-4).

According to the invention, the acetylated starch has a viscosity, at an dry extract of between 12.5 and 14.5% (measured for example by a solid extracts refractometer) and at a pH comprised in the range of 5 to 7, in the range of 60 to 200 mPa.s, as measured by a Brookfield apparatus with a RV2 spindle, at a speed of 20 rpm ("round per minute"), and at a temperature of 23°C.

Preferably, the acetylated starch is chosen among the starches comprising 73 to 87% of amylopectin and 13 to 27% of amylose.

Accordingly, the acetylated starch is preferably chosen among the acetylated potato starches, the acetylated corn starches and the acetylated wheat starches. More preferably, the acetylated starch is an acetylated potato starch.

The adhesive composition can further comprise 1 to 2% by weight of biocide, by weight with respect to the total weight of the composition.

The adhesive composition can further comprise 0.2 to 0.5% by weight of defoamer, by weight with respect to the total weight of the composition.

The biocide and the defoamer are compounds which are well known to the skilled person.

The adhesive composition according to the invention is preferably suitable for contact with food products, that is to say generally compliant with food contact regulations which are well-known to the skilled person.

The adhesive composition according to the invention is preferably in powder form, usually to be diluted in water or in an aqueous medium.

The adhesive composition in powder form according to the invention is generally obtained by mixing the starch, the cellulose-based thickener and the urea, the optional biocide and the optional defoamer, all in powder form, or sprayed as aqueous solution onto the mixture of powders. For example all the components in powder form are mixed by the means of a dynamic mixer until homogeneity is reached, and further solubilized in water.

Another object of the invention is an aqueous liquid adhesive composition for bonding plies of multi-ply sheets, said composition comprising from 15 to 25% by weight of acetylated starch, from 0.4 to 2% by weight of cellulose-based thickener and from 3 to 8% by weight of urea, by weight with respect to the total weight of the composition.

Preferably, the acetylated starch is present in an amount within a range of 18 to 22% by weight with respect to the total weight of the composition.

Preferably, the cellulose-based thickener is present in an amount within a range of 0.5 to 0.8% by weight with respect to the total weight of the composition.

Preferably, urea is present in an amount from 4 to 6% by weight with respect to the total weight of the composition.

The aqueous adhesive composition can further comprise 0.2 to 0.6% by weight of biocide, by weight with respect to the total weight of the composition.

The aqueous adhesive composition can further comprise 0.04 to 0.16% by weight of defoamer, by weight with respect to the total weight of the composition.

Preferably, the aqueous liquid adhesive composition has a pH value from 5 to 7, more preferably from 5 to 6.

This commercial liquid form corresponds usually to a "ready-to-be-diluted" concentrated product containing generally 10 to 40% of dry extract, for example 24-26%, by weight with respect to the total weight of said aqueous liquid adhesive composition. This concentrated product can be easily transported and stored until use. A dilution of this concentrated product is generally performed immediately before use in industrial facilities until a dry extract in general within an average range of 1 to 10% by weight is obtained. This diluted liquid form is called "ready-for-use".

Whatever the form of the adhesive composition, it is generally used after a dilution of the aqueous liquid adhesive composition (which is often in "ready-to-be-diluted" form) or by dilution of the dry form, generally a powder, in water, the important being that the adhesive composition which is used for bonding is the "ready-for-use" composition.

The "ready-to-be-diluted" adhesive composition according to the invention preferably comprises, in percentage by weight with respect to the total weight of said adhesive composition:

| | |
|---|---|
| - Acetylated starch | 8 to 32 % |
| - Cellulose-based thickener | 0.1 to 1% |
| - Urea | 1 to 7% |
| - Biocide | 0.1 to 0.5% |
| - Defoamer | 0.1 to 0.5% |
| - Water | 60 to 90% |

The acetylated starch is preferably acetylated potato starch.

The adhesive compositions according to the invention, either in dry form or in aqueous form, showed advantageously excellent cold water solubility providing the advantage of easy dilution and short mixing time to get a homogenous solution required by the industrial production processes.

The adhesive compositions according to the invention show clearly improved film forming properties, as it will be illustrated in the examples.

The "ready-to-be-diluted" liquid adhesive composition according to the invention is generally manufactured in a manner known to those skilled in the art, usually by dissolving the adhesive composition in dry form into water, or, preferably, by dissolving the starch and the thickener in an aqueous solution comprising water and urea, in more or less concentrated form. In this case, one can proceed most often of two different ways. In the first way, one proceeds to an addition of the starch powder and thickener, usually in spray; the urea is added, until the mixture is homogeneous; and the resulting mixture is stirred with vigorous stirring so as to obtain a vortex, in a mixture of water biocide and defoamer. In the second case, the starch is dissolved in a mixture of water and biocide, until the mixture is homogeneous; urea is added, until the mixture is homogeneous mixture; the thickener is added until the mixture is homogeneous mixture; the defoamer is added ; and the resulting mixture is left under stirring until a homogeneous solution is substantially free of lumps.

Another object of the invention is a use of an adhesive composition according to the invention, for the bonding of plies of multi-ply sheets of tissue paper.

This method of bonding uses conventional industrial apparatuses in use. The only change is that the conventional industrial PVOH-based adhesive composition is replaced by the adhesive composition according to the invention.

A significant advantage of the invention is its major impact on the industrial process. Actually, the cleaning of the adhesive composition which fouls or clogs the metallic cylinder or other machine elements, is significantly easier and more effective compared to the cleaning of conventional PVOH-based formulations. A consequence is that it advantageously provides shorter maintenance stops and therefore higher productivity of the method of bonding multiple plies.

Another object of the invention is a method of bonding multiple plies using the aqueous adhesive composition according to the invention, and winding the multi-ply sheets around a sleeve-forming part made of cardboard mandrel or strip so as to form rolls of multi-ply sheets.

The techniques of the present invention will be readily understood by considering the following detailed description in conjunction with the accompanying drawings, in which:

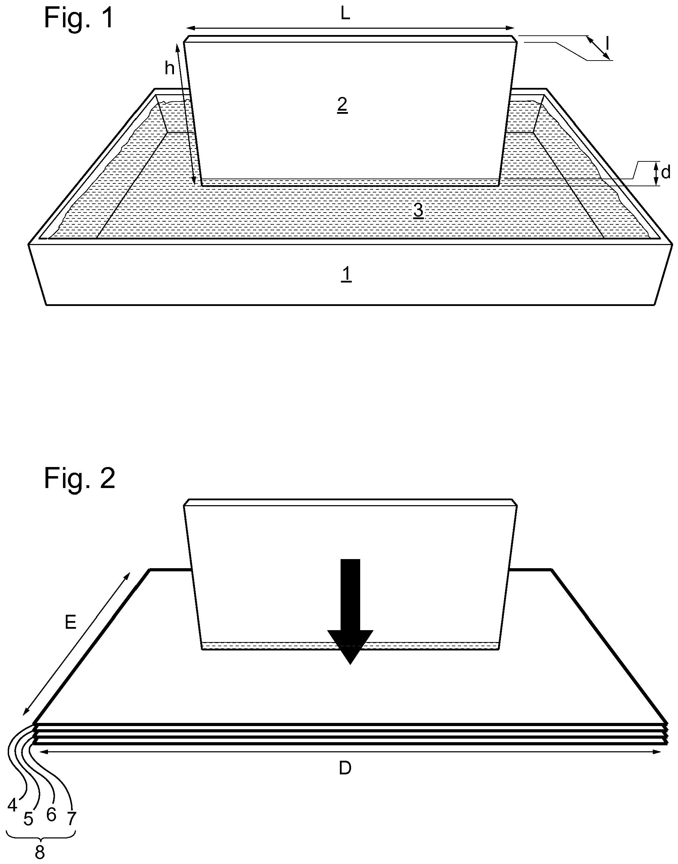

Figures 1 and 2 illustrate applicant's laboratory experiments.

Figure 1 shows schematically the gluing of a stainless steel plate by dipping it in a bath of adhesive composition.

Figure 2 shows schematically the coating of a multi-ply sheet of tissue paper containing 4 sheets with the adhesive composition according to the process of Figure 1.

Figure 3 is a schematic representation of a method of manufacturing multi-ply sheets of tissue paper, said method comprising bonding four plies of multi-ply sheets of tissue paper according to the invention.

Figure 4 shows the results in terms of viscosity with respect to the dilution rate, for a comparative composition and for a composition according to the invention.

Figure 5 shows the results in terms of dry extract content with respect to the dilution rate, for a comparative composition and for a composition according to the invention.

To facilitate understanding, identical reference numerals have been used, when possible, to designate identical elements that are common to the Figures. The drawings are not necessarily to scale and the respective dimensions of various elements in the drawings are depicted schematically and not necessarily to scale.

Figures 1, 2, 4 and 5 are discussed in the examples below.

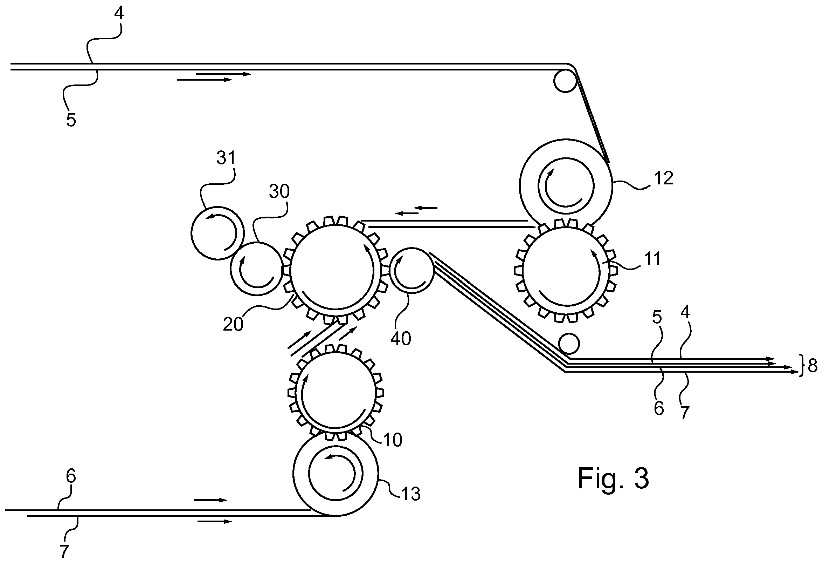

Figure 3 is a schematic representation of a method of manufacturing multi-ply sheets of tissue paper, said method comprising bonding four plies of multi-ply sheets of tissue paper according to the invention.

In the implementation of Figure 3 is disclosed an apparatus which serves for embossing and combining four plies 4, 5, 6, 7 of tissue paper in the form of a fibrous web, and which operates as follows.

Two plies 6, 7 are combined and sent to a bottom embossing roll 10 via a winding roll 13. The two plies 6, 7 are embossed with one and the same nip and, therefore, provided with the same embossing pattern consisting of embossing protrusions. Subsequently, the plies 6, 7 are recombined in a merging roll which is a design roll 20.

Meanwhile, two further plies 4, 5 are fed via a winding roll 12 to a top embossing roll 11 and are also embossed in combination. Afterwards, they are also fed to the design roll 20.

The glue application roll 30 is provided for applying the adhesive composition to the upper one of the plies 4, 5. It is to be noted that design roll 20 can also correspond to a further embossing roll to apply a further embossing pattern to all the plies 4 to 7. Subsequently, the plies 4, 5 are fixed to the previously mentioned plies 6, 7 at the marrying roll 40. The resultant four-ply sheet 8, comprising the four embossed plies 6, 7, 4, 5, is then discharged from the apparatus and further winded around a sleeve-forming part made of cardboard mandrel or strip so as to form rolls of multi-ply sheets (unrepresented step).

The following examples illustrate the invention without limiting its scope.

## Examples

The examples related to the bonding of four sheets, modeling the manufacture of four-ply sheets of tissue paper, using two different adhesive compositions: one adhesive composition according to the invention INV and one comparative PVOH-based adhesive composition C according to the prior art (conventional industrial use).

The acetylated starch which was used according to the invention is the product Sobex 222 sold by Südstärke (Schrobenhausen, Germany). This product is presented as a highly substituted depolymerized potato starch, under the form of amorphous, white granulates. The specifications of said starch are a percentage of acetylation around 2 - 2.5%, a dry extract content of around 87% (measured by infrared-luminometer), a moisture content of around 11%, a pH value of around 5 to 7 (measured at a content of 13.5% by weight in tap water) and a viscosity at 85°C of around 50 to 75 mPa.s (measured by a Brookfield viscometer, spindle RV2 at 100 rpm, at a content of 13.5% by weight in tap water). The viscosity was measured at 140 mPa.s by Brookfield viscometer, spindle RV2 at 20 rpm, at a content of 13.5% by weight in water, pH 5.9, and at a temperature of 23°C. The solubility in cold water was around 30%.

## 1. Adhesive compositions of the invention and of the prior art

### 1.1 Comparative Composition (C)

Comparative composition C was a commercial adhesive composition based on polyvinyl alcohol (PVOH), currently used in industrial facilities. It comprised the following components:

Defoamer (Tego® antifoam KS 53 from Evonik) 3.3 kg
PVOH 1 (Apv.mowiol 26/88 from Sigma ALdrich) 118 kg
PVOH 2 (Celvol 540 apv 24/88 from Celanese) 49 kg
Biocide (Acticide® MBL MIT-BIT-Bronopol from Thor) 1.9 kg
Demineralized water (qsp to 1000 kg) 827.8 kg

Polyvinyl alcohols PVOH 1 and PVOH 2 had each one a value of 88% of hydrolysis of the polyvinyl acetate groups (PVA), which means that each of these polymers are copolymers comprising 88% PVOH and 12% of PVA (percentage by weight).

PVOH 1 had a viscosity of 26 ± 1.5 mPas (according to the standard DIN 53015).

PVOH 2 had a viscosity of 24 ± 1.5 mPas (according to the standard DIN 53015).

Such a composition C had a viscosity of 22000 mPa.s (measured by Brookfield at 24% solids by weight - solid extracts refractometer- in water at pH 4-8, spindle RV6, 20rpm, 23°C), and a solids extract (ES) of 2.3% by weight (measured by refractometer DIGIT ATC at 23°C).

1.2 Composition of the invention (INV)

The dry adhesive composition according to the invention was the following, in % by weight.

Acetylated starch (SOBEX 222 from SÜDSTÄRKE) 76.63%

Cellulose-based Thickener (Na-CMC AKUCELL® AF 2985 from AKZO NOBEL) 2.30%

Urea 19.16%

Biocide (PARMETOL A 28 from SCHELKE & MAYER) 1.53%

Defoamer (AGITAN 109 from MÜNZING CHEMIE) 0.38%

It was manufactured by mixing the different components in the following order, as detailed in the description above: dissolving the starch in water with biocide; adding urea, dissolving the thickener; and adding the defoamer.

The aqueous liquid adhesive composition according to the invention (INV) had the following composition, in % by weight.

Water 73,9%

Acetylated starch (SOBEX 222 from SÜDSTÄRKE) 20,0%

Cellulose-based Thickener (Na-CMC AKUCELL® AF 2985 from AKZO NOBEL) 0,6%

Urea 5,0 %

Biocide (PARMETOL A 28 from SCHELKE & MAYER) 0,4%

Defoamer (AGITAN 109 from MÜNZING CHEMIE) 0,1 %

This composition was manufactured by dissolution of the dry adhesive composition in cold demineralized water.

The pH of the composition was 6.

The viscosity of the composition was measured around 11,000-13,000 mPa.s (measured by Brookfield at 24-25% by weight in water at pH 6, spindle RV6, 20 rpm and at 23°C) and a dry extract (ES) of 24-25% by weight (measured by refractometer DIGIT ATC at 23°C).

The self-live of this product was tested. The viscosity of the product proved to be stable 6 months at 15-25°C.

**2. Dilution viscosity and dry extract of the adhesive compositions of the invention and of the prior art**

After dilutions to a rate of 1:2, 1:3, 1:4, 1:5, 1:6 and 1:7 with water (under the meaning: volume of composition C or INV : volume of water), the viscosity curves of the compositions C according to the invention and INV of the prior art were as in the following Table (results presented as viscosity/dry extract):

| Dilution rate | Composition C Viscosity/ Dry extract | Composition INV Viscosity/ Dry extract |
|---|---|---|
| 1:2 | 80/6,2 | 126/8,0 |
| 1:3 | 36/5,2 | 60/6,2 |
| 1:4 | 26/4,4 | 40/4,8 |
| 1:5 | 20/3,8 | 32/3,8 |
| 1:6 | 16/3,2 | 26/3,0 |
| 1:7 | 14/3,0 | 20/2,8 |

The viscosity is expressed in mPa.s (Brookfield, solid °Bx refractometer 23°C, spin RV2, 20rpm, 20-23°C) and the dry extract (ES) is expressed in % (by weight) (measured by refractometer DIGIT ATC 23°C).

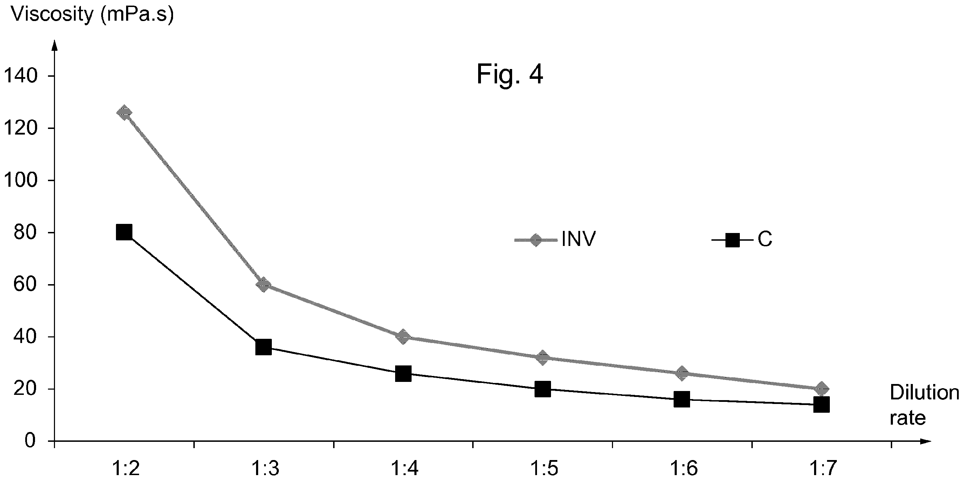

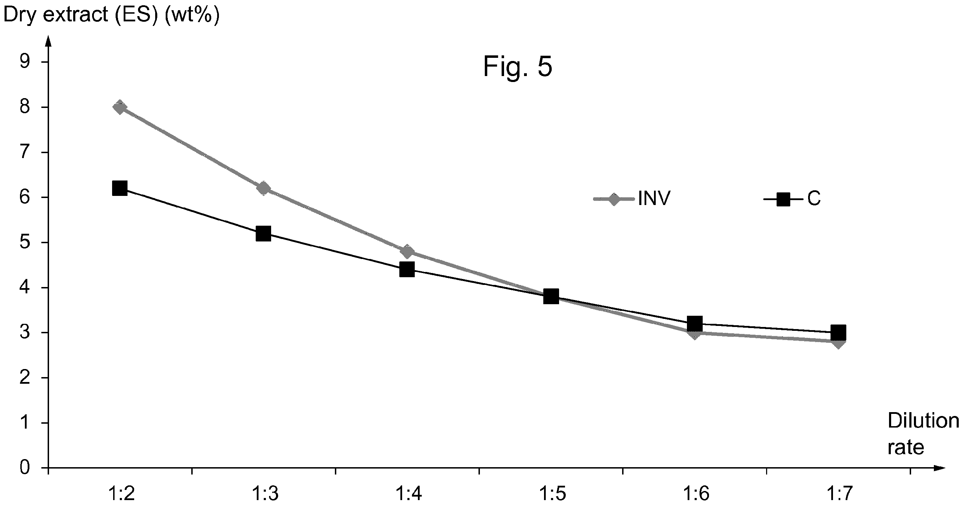

The results for the comparative composition C and for the composition according to the invention INV are shown in Figures 4 and 5,

Figure 4 showing the results in terms of viscosity with respect to the dilution rate, and Figure 5 showing the results in terms of dry extract content with respect to the dilution rate.

The results show that the composition according to the invention INV provides similar results than the comparative composition C.

The water content range/ dilution range of ready-to-use formulation is generally chosen by the user according to these Figures 4 and 5. For a 1-2 ply toilet tissue it's possible to dilute the concentrated glue up to max 1:7. For 4 ply tissue, a dilution rate of 1:3- 1:4 is recommended.

**3. Experiments on the bonding strength of the adhesive compositions of the invention and of the prior art**

3.1 Description of the protocol of the experiments in the laboratory

The laboratory test was to evaluate the bonding strength between two plies, in Newtons (N), by peeling. These plies were the first and the second plies, or the second and third plies, or the third and the fourth plies, of a test piece composed of four superimposed plies of sheets.

White laboratory paper sheets (Goma Camps) were used. Test pieces were cut, each test piece being of dimensions 4 cm x 17 cm (E x D, see

Figure 2), using a cutter. Each test piece is formed of four plies (referenced 4, 5, 6 and 7, see Figure 2) which have been stacked to form a multi-ply sheet referenced 8. Each series of tests, for a given adhesive composition, was made on 5 different specimens.

The test is schematically illustrated by the accompanying figures, in which Figure 1 shows schematically the gluing of an aluminium plate by dipping it in a bath of adhesive composition with a defined depth (d), and Figure 2 shows schematically the coating of a multi-ply sheet containing 4 plies coated with the adhesive composition according to the process of Figure 1. The same operator has made these blind tests so as to ensure reproducibility.

The test was performed in a conditioned room (23 ° C, 50% relative humidity).

a) Coating

A plate 2 made of stainless steel was used, of dimensions 15 cm x 0.5 cm x 10 cm (L x W x H, Figure 1) and fixed on a frame (not shown).

Gluing of the coating plate

This gluing is shown in Figure 1. The aluminum plate 2 was dipped briefly (for about 3 seconds, the time to reach the required depth "d" and remove the plate) in the adhesive composition 3 (in an amount of about 300 g) contained in a tray 1 made of stainless steel. A gauge (not shown) attached to the coating plate allows to accurately determine the depth sizing, which had been chosen equal to about 1 mm.

Coating folds_and gluing the multi-ply sheet

As illustrated in Figure 2, the lower part of the plate 2 has, immediately after gluing, been brought gently into contact with the test piece held by weights (not shown) on a limited contact time of 1 second. The test piece was a multi-ply sheet (referenced 8, referenced plies 4, 5, 6, 7). The duration between the gluing of the coating plate and the coating of the piece is estimated at about 10 seconds. This coating resulted in the bonding, by the adhesive composition, of the plies of the multi-ply sheet. The test piece was then placed on siliconized paper and was allowed to dry for 24 hours at room temperature (i.e. around 20°C), before its peeling was carried out.

b) Peeling

The measurement of the peeling test was carried out by the same operator according to the same method for each adhesive composition and for each specimen.

3.2 Results of the experiments in the laboratory

The evaluation was made according to the following criteria.

Rigidity

| soft | - |
| rigid | + |
| more rigid | ++ |
| very rigid | +++ |

Bonding

| no bonding | - |
| light | + |
| strong | ++ |
| very strong | +++ |

The results are provided in the following Table, in which:

Bonding 1/2: means first ply on second ply

bonding 2/3: means second ply on third ply

bonding 3/4: means third ply on fourth ply

| | | | **Adhesive composition C** | **Adhesive composition INV** |
|---|---|---|---|---|
| dilution 1:2 | Rigidity | | +++ | +++ |
| | | bonding 1/2 | +++ (damaging) | +++ (damaging) |
| | | bonding 2/3 | ++ | +++ |
| | | bonding 3/4 | + | +++ |
| dilution 1:3 | Rigidity | | +++ | +++ |
| | | bonding 1/2 | +++ | +++ |
| | | bonding 2/3 | ++ | ++ |
| | | bonding 3/4 | + | + |
| dilution 1:4 | Rigidity | | ++ | ++ |
| | | bonding 1/2 | ++ | ++ |
| | | bonding 2/3 | ++ | ++ |
| | | bonding 3/4 | + | + |
| dilution 1:5 | Rigidity | | + | + |
| | | bonding 1/2 | ++ | ++ |
| | | bonding 2/3 | ++ | ++ |
| | | bonding 3/4 | + | + |
| dilution 1:6 | Rigidity | | - | - |
| | | bonding 1/2 | ++ | ++ |
| | | bonding 2/3 | + | + |

(continued)

|  |  | Adhesive composition C | Adhesive composition INV |
|---|---|---|---|
|  | bonding 3/4 | + | + |
| dilution 1:7 | Rigidity | - | - |
|  | bonding 1/2 | + | + |
|  | bonding 2/3 | + | + |
|  | bonding 3/4 | - | + |

These results shows that the bonding results of the adhesive composition according to the invention INV are similar to bonding results of the adhesive composition C according to the prior art.

**Claims**

1. An adhesive composition in dry form, for bonding plies of multi-ply sheets of tissue paper, said composition comprising:

   - At least one acetylated starch, the acetylated starch having a percentage of acetylation within a range of 0.1 to 8% by weight with respect to the total weight of the acetylated starch; in an amount within a range of 70 to 80%, by weight with respect to the total weight of the composition;
   - At least one cellulose-based thickener in an amount within a range of 2 to 5 %, by weight with respect to the total weight of the composition; and
   - Urea in an amount within a range of 15 to 25%, by weight with respect to the total weight of the composition.

2. The adhesive composition according to claim 1, wherein the acetylated starch has a solubility in water, at an dry extract of between 12.5 and 14.5% and at a pH comprised in the range of 5 to 7, in the range of 60 to 200 mPa.s, as measured by a Brookfield apparatus with a RV2 spindle, at a speed of 20 rpm, and at a temperature of 23°C.

3. The adhesive composition according to any one of claims 1 and 2, **characterised in that** the acetylated starch is chosen among the starches comprising 73 to 87% of amylopectin and 13 to 27% of amylose.

4. The adhesive composition according to any one of claims 1 to 3, **characterised in that** the acetylated starch is chosen among the acetylated potato starches, the acetylated corn starches and the acetylated wheat starches.

5. The adhesive composition according to any one of claims 1 to 4, **characterised in that** said adhesive composition further comprises 1 to 2% of biocide, by weight with respect to the total weight of the composition.

6. The adhesive composition according to any one of claims 1 to 5, **characterised in that** said adhesive composition further comprises 0.2 to 0.5% of defoamer, by weight with respect to the total weight of the composition.

7. The adhesive composition according to any one of claims 1 to 6, **characterised in that** said composition is suitable for contact with food products.

8. The adhesive composition according to any one of claims 1 to 7, **characterised in that** said composition is in powder form.

9. An aqueous liquid adhesive composition for bonding plies of multi-ply sheets, said composition comprising from 15 to 25% of acetylated starch, from 0.4 to 2% of cellulose-based thickener and from 3 to 8% of urea, by weight with respect to the total weight of the composition.

10. The aqueous liquid adhesive composition according to claim 9, wherein said composition further comprises 0.2 to 0.6% of biocide.

11. The aqueous liquid adhesive composition according to any one of claims 9 and 10, wherein said composition further comprises 0.04 to 0.16% of defoamer, by weight with respect to the total weight of the composition.

12. The aqueous liquid adhesive composition according to any one of claims 9 to 11, wherein said composition comprises the composition in dry form according to any one of claims 1 to 8, in an amount of 10 to 40% by weight with respect to the total weight of said aqueous liquid adhesive composition.

13. The aqueous liquid adhesive composition according to any one of claims 9 to 12, wherein said composition has a pH value from 5 to 7.

14. A use of an adhesive composition according to any one of claims 1 to 13, for the bonding of plies of multi-ply sheets of tissue paper.

15. A method of manufacturing multi-ply sheets of tissue paper, said method comprising bonding multiple plies using the adhesive composition according to any one of claims 9 to 13, and winding the multi-ply sheets around a sleeve-forming part made of cardboard mandrel or strip so as to form rolls of multi-ply sheets.


**Patentansprüche**

1. Klebstoffzusammensetzung in trockener Form zum Binden von mehreren mehrlagigen Bögen von Gewebepapier, wobei die Zusammensetzung umfasst:

   - mindestens eine acetylierte Stärke, wobei die acetylierte Stärke einen Acetylierungsanteil innerhalb eines Bereichs von 0,1 bis 8 Gew.-%, bezogen auf das Gesamtgewicht der acetylierten Stärke aufweist; in einer Menge innerhalb eines Bereichs von 70 bis 80 Gew.-%, bezogen auf das Gesamtgewicht der Zusammensetzung;
   - mindestens einen Verdicker auf Cellulosebasis in einer Menge innerhalb eines Bereichs von 2 bis 5 Gew.-%, bezogen auf das Gesamtgewicht der Zusammensetzung; und
   - Harnstoff in einer Menge innerhalb eines Bereichs von 15 bis 25 Gew.-%, bezogen auf das Gesamtgewicht der Zusammensetzung.

2. Klebstoffzusammensetzung nach Anspruch 1, wobei die acetylierte Stärke, bei einem Trockenextrakt zwischen 12,5 und 14,5 % und bei einem pH im Bereich von 5 bis 7, eine Löslichkeit in Wasser im Bereich von 60 bis 200 mPa.s aufweist, gemessen mit einer Brookfield-Apparatur mit einer RV2-Spindel bei einer Geschwindigkeit von 20 U/min und einer Temperatur von 23 °C.

3. Klebstoffzusammensetzung nach einem der Ansprüche 1 und 2, **dadurch gekennzeichnet, dass** die acetylierte Stärke unter den Stärken ausgewählt ist, die 73 bis 87 % Amylopektin und 13 bis 27 % Amylose umfassen.

4. Klebstoffzusammensetzung nach einem der Ansprüche 1 bis 3, **dadurch gekennzeichnet, dass** die acetylierte Stärke unter den acetylierten Kartoffelstärken, den acetylierten Maisstärken und den acetylierten Weizenstärken ausgewählt ist.

5. Klebstoffzusammensetzung nach einem der Ansprüche 1 bis 4, **dadurch gekennzeichnet, dass** die Klebstoffzusammensetzung ferner 1 bis 2 Gew.-% Biozid, bezogen auf das Gesamtgewicht der Zusammensetzung, umfasst.

6. Klebstoffzusammensetzung nach einem der Ansprüche 1 bis 5, **dadurch gekennzeichnet, dass** die Klebstoffzusammensetzung ferner 0,2 bis 0,5 % Entschäumungsmittel, bezogen auf das Gesamtgewicht der Zusammensetzung, umfasst.

7. Klebstoffzusammensetzung nach einem der Ansprüche 1 bis 6, **dadurch gekennzeichnet, dass** die Zusammensetzung für den Kontakt mit Nahrungsmittelprodukten geeignet ist.

8. Klebstoffzusammensetzung nach einem der Ansprüche 1 bis 7, **dadurch gekennzeichnet, dass** die Zusammensetzung in Pulverform vorliegt.

9. Wässrige flüssige Klebstoffzusammensetzung zum Binden mehrerer mehrlagiger Blätter, wobei die Zusammensetzung 15 bis 25 Gew.-% acetylierte Stärke, 0,4 bis 2 Gew.-% Verdickungsmittel auf Cellulosebasis und 3 bis 8 Gew.-

% Harnstoff, bezogen auf das Gesamtgewicht der Zusammensetzung, umfasst.

10. Wässrige flüssige Klebstoffzusammensetzung nach Anspruch 9, wobei die Zusammensetzung ferner 0,2 bis 0,6 % Biozid umfasst.

11. Wässrige flüssige Klebstoffzusammensetzung nach einem der Ansprüche 9 und 10, wobei die Zusammensetzung ferner 0,04 bis 0,16 % Entschäumungsmittel, bezogen auf das Gesamtgewicht der Zusammensetzung, umfasst.

12. Wässrige flüssige Klebstoffzusammensetzung nach einem der Ansprüche 9 bis 11, wobei die Zusammensetzung die Zusammensetzung in trockener Form nach einem der Ansprüche 1 bis 8 in einer Menge von 10 bis 40 Gew.-%, bezogen auf das Gesamtgewicht der wässrigen flüssigen Klebstoffzusammensetzung, umfasst.

13. Wässrige flüssige Klebstoffzusammensetzung nach einem der Ansprüche 9 bis 12, wobei die Zusammensetzung einen pH-Wert von 5 bis 7 aufweist.

14. Verwendung einer Klebstoffzusammensetzung nach einem der Ansprüche 1 bis 13 zum Binden von mehreren mehrlagigen Blättern von Gewebepapier.

15. Verfahren zum Herstellen mehrlagiger Blätter von Gewebepapier, wobei das Verfahren das Binden von mehreren Lagen unter Verwendung der Klebstoffzusammensetzung nach einem der Ansprüche 9 bis 13 und das Wickeln der mehrlagigen Blätter um ein hülsenformendes Teil umfasst, das aus einem Pappdorn oder -streifen besteht, um Rollen von mehrlagigen Blättern zu bilden.

**Revendications**

1. Composition adhésive sous forme sèche, destinée au collage d'épaisseurs de feuilles de papier mince à plusieurs épaisseurs, ladite composition comprenant :

  - au moins un amidon acétylé, l'amidon acétylé ayant un pourcentage d'acétylation de 0,1 à 8 % en poids relativement au poids total de l'amidon acétylé ; dans une quantité de 70 à 80 % en poids relativement au poids total de la composition ;
  - au moins un épaississant à base de cellulose dans une quantité de 2 à 5 % en poids relativement au poids total de la composition ; et
  - de l'urée dans une quantité de 15 à 25 % en poids relativement au poids total de la composition.

2. Composition adhésive selon la revendication 1, dans laquelle l'amidon acétylé a une solubilité dans l'eau, à un extrait sec de 12,5 à 14,5 % et à un pH de 5 à 7, de 60 à 200 mPa.s, mesurée par un appareil Brookfield équipé d'une broche RV2 tournant à une vitesse de 20 trs/min, et à une température de 23 °C.

3. Composition adhésive selon l'une quelconque des revendications 1 ou 2, **caractérisée en ce que** l'amidon acétylé est choisi parmi les amidons comprenant 73 à 87 % d'amylopectine et 13 à 27 % d'amylose.

4. Composition adhésive selon l'une quelconque des revendications 1 à 3, **caractérisée en ce que** l'amidon acétylé est choisi parmi les amidons de pomme de terre acétylés, les amidons de maïs acétylés et les amidons de blé acétylés.

5. Composition adhésive selon l'une quelconque des revendications 1 à 4, **caractérisée en ce que** ladite composition adhésive comprend en outre 1 à 2 % en poids de biocide relativement au poids total de la composition.

6. Composition adhésive selon l'une quelconque des revendications 1 à 5, **caractérisée en ce que** ladite composition adhésive comprend en outre 0,2 à 0,5 % en poids d'antimousse relativement au poids total de la composition.

7. Composition adhésive selon l'une quelconque des revendications 1 à 6, **caractérisée en ce que** ladite composition est apte au contact avec les produits alimentaires.

8. Composition adhésive selon l'une quelconque des revendications 1 à 7, **caractérisée en ce que** ladite composition est sous forme de poudre.

9. Composition adhésive sous forme de liquide aqueux, destinée au collage d'épaisseurs de feuilles à plusieurs épaisseurs, ladite composition comprenant de 15 à 25 % d'amidon acétylé, de 0,4 à 2 % d'épaississant à base de cellulose et de 3 à 8 % d'urée en poids relativement au poids total de la composition.

10. Composition adhésive sous forme de liquide aqueux selon la revendication 9, ladite composition comprenant en outre 0,2 à 0,6 % de biocide.

11. Composition adhésive sous forme de liquide aqueux selon l'une quelconque des revendications 9 ou 10, ladite composition comprenant en outre 0,04 à 0,16 % en poids d'antimousse relativement au poids total de la composition.

12. Composition adhésive sous forme de liquide aqueux selon l'une quelconque des revendications 9 à 11, ladite composition comprenant la composition sous forme sèche selon l'une quelconque des revendications 1 à 8, dans une quantité de 10 à 40 % en poids relativement au poids total de ladite composition adhésive sous forme de liquide aqueux.

13. Composition adhésive sous forme de liquide aqueux selon l'une quelconque des revendications 9 à 12, ladite composition ayant une valeur de pH de 5 à 7.

14. Utilisation d'une composition adhésive selon l'une quelconque des revendications 1 à 13, destinée au collage d'épaisseurs de feuilles de papier mince à plusieurs épaisseurs.

15. Procédé de fabrication de feuilles de papier mince à plusieurs épaisseurs, ledit procédé comprenant le collage de multiples épaisseurs en utilisant la composition adhésive selon l'une quelconque des revendications 9 à 13, et l'enroulement des feuilles à plusieurs épaisseurs autour d'une pièce formant un manchon constituée d'un mandrin ou d'une bande de carton de façon à former des rouleaux de feuilles à plusieurs épaisseurs.

Fig. 1

L

l

h

2

d

3

1

Fig. 2

E

D

4 5 6 7

8

Fig. 3

Fig. 4

EP 3 275 960 B1

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6379447 B
- US 2362282 A

- US 4465702 A